# EUROPÄISCHE PATENTSCHRIFT

(11) **EP 2 637 852 B1**
(45) Veröffentlichungstag und Bekanntmachung des Hinweises auf die Patenterteilung: **18.01.2017**
(21) Anmeldenummer: 11782379.9
(22) Anmeldetag: 26.10.2011
(51) Int. Cl.: F15B 11/02, F15B 7/00, B30B 15/16, F15B 11/024

(54) **HYDRAULISCHE ACHSE**
HYDRAULIC AXIS
ESSIEU HYDRAULIQUE

(30) Priorität: 11.11.2010 DE 102010050924
(43) Veröffentlichungstag der Anmeldung: 18.09.2013
(73) Patentinhaber: Robert Bosch GmbH, 70469 Stuttgart (DE)
(72) Erfinder: GOTTFRIED, Hendrix, 97737 Gemünden am Main (DE); Schmidt Stefan, DE - 97816 Lohr (DE)
(74) Vertreter: Wiesmann, Stephan
(86) Internationale Anmeldenummer: PCT/EP2011/005388
(87) Internationale Veröffentlichungsnummer: WO 2012/062416

(56) Entgegenhaltungen:
- EP-A2- 0 867 271
- WO-A2-2011/079333
- DE-A1- 4 436 666

## Beschreibung

Die vorliegende Erfindung betrifft eine hydraulische Achse. Unter einer hydraulischen Achse wird im Rahmen dieser Anmeldung ein hydraulischer Aktor, z.B. ein Hydrozylinder sowie die den Aktor mit Fluid ansteuernde hydraulische bzw. elektro-hydraulische Steuerungsanordnung verstanden. Solche hydraulischen Achsen sind kompakte, kräftige und leistungsstarke Antriebe. Diese können bei einer Vielzahl industrieller Automationsanwendungen zum Einsatz kommen, z.B. bei Pressen, Kunststoffmaschinen, Biegemaschinen, usw.
Insbesondere sind derartige Antriebe dafür ausgelegt, zumindest zwei Bewegungsabläufe, nämlich eine schnelle Überführungsbewegung - nachfolgend als Eilgang oder Eilhub bezeichnet - sowie eine Kraft aufbringende Arbeitsbewegung - nachfolgend als Arbeitshub oder als Pressgang bezeichnet - zu realisieren.

Eine bekannte hydraulische Achse zeigt die Anmeldung DE 10 2009 043 034 der Anmelderin. In einem vorgespannten hydraulischen System sind ein Hauptzylinder, ein Eilgangzylinder und eine drehrichtungsumkehrbare Hydromaschine miteinander verschaltet. Über Ventile kann die Verschaltung der Komponenten so verändert werden, dass eines von mehreren über z.B. Kolbenflächen vorgegebenen hydromechanischen Übersetzungsverhältnissen ausgewählt ist. Damit lassen sich die erwähnten Eilhübe oder Arbeitshübe effizient durchführen. Nachteilig ist, dass bei dieser hydraulischen Achse mindestens 2 Ventile abhängig von dem jeweiligen Arbeitszyklusabschnitt aktiv geschaltet werden müssen. Zudem erfordert die benötigte Vorspannung einen hohen apparativen Aufwand.

Die nachveröffentlichte Druckschrift WO2011/079333 A2 zeigt eine Antriebsvorrichtung für eine Biegepresse.

Antrieb bereit zu stellen, der einen Eilhub und einen Arbeitshub mit unterschiedlichen hydromechanischen Übersetzungsverhältnissen zwischen Antriebsmaschine und hydraulischen Aktoren zur Verfügung stellt, und der alternativ zur vorbenannten Anmeldung ohne oder nur mit geringer hydraulischer Vorspannung betreibbar ist.

Diese Aufgabe wird durch einen hydraulischen Antrieb mit den Merkmalen des Patentanspruchs 1 gelöst.

Insbesondere wird eine hydraulische Achse geschaffen, die sehr energieeffizient arbeitet, ein geschlossenes Hydrosystem besitzt, keine oder nur eine geringe Vorspannung besitzt und mit einem kleinen, von der Umwelt sehr gut abzugrenzenden bzw. abzuschließenden Ölvolumen auskommt.

Gemäß einer besonders bevorzugten Weiterbildung ist der Betrieb dadurch gekennzeichnet, dass die Regelung bzw. Steuerung des Arbeitskolbens in Position, Geschwindigkeit oder Druck nicht über die Drosselwirkung des Ölflusses von Steuer- / Regelventilen erfolgt, sondern vorzugsweise durch die Steuer- / Regelung der Hydromaschine in Verbindung mit einem Servomotor. Hierzu sind entsprechende Sensoren an die Maschine zu montieren. Die Bewegungsrichtung des Arbeitskolbens wird alleinig durch die Drehrichtung des Servomotors vorgegeben.
Gemäß einer besonders bevorzugten Weiterbildung ist der Betrieb dadurch gekennzeichnet, dass der Betrieb durch Verringerung der internen Druckverluste, teilweise Rückgewinnung der nicht von Arbeitsprozess benötigten Energie, sowie der Möglichkeit der Energierückspeisung in das elektrische Energienetz besonderes energieeffizient zu gestalten ist.

Weitere vorteilhafte Ausgestaltungen der Erfindung sind Gegenstand der Unteransprüche.

Die Erfindung betrifft dem zufolge einen hydraulischen Antrieb mit einer von einem elektrischen Antriebsmotor drehzahlvariabel angesteuerten Hydromaschine, einem Hauptzylinder zur Durchführung eines Kraft aufbauenden Bewegungsablaufs sowie einem Nebenzylinder zur Ölspeicherung zur Realisierung eines geschlossenen Kreislaufes.

Erfindungsgemäß ist der Hauptzylinder durch einen, vorzugsweise auf beide Kolbenflächen einwirkenden Hydromaschine eingespannt, sowie von einem Nebenzylinder auf der Bodenseite des Hauptzylinder, vorzugsweise durch ein Hydraulikventil getrennt angeordnet.

Erfindungsgemäß erfolgt die Regelung bzw. Steuerung der Hydromaschine über die Drehbewegung des Elektro- Servomotors.

Erfindungsgemäß bestimmt die Drehrichtung des Servomotors die Bewegungsrichtung des Presskolbens.

Alternativ oder zusätzlich kann die Hydromaschine als Hydromaschine mit verstellbarem Fördervolumen ausgebildet sein, wobei insbesondere die Förderrichtung mittels der Verstellung des Fördervolumens bei gleichbleibender Drehrichtung des die Hydromaschine antreibenden Motors umkehrbar ist. In letzterem Fall bezeichnet man die verstellbare Hydromaschine auch als eine "über Null verschwenkbare" Hydromaschine.

Erfindungsgemäß erfolgt das Umschalten zwischen Eilgang und Pressgang durch elektrisches umschalten eines Schaltventils.

Erfindungsgemäß ist es aber auch möglich, die Umschaltung zwischen Eilgang und Pressgang automatisch ohne Schaltventil, allein durch den jeweiligen Lastzustand des Presszylinders ablaufen zu lassen.

Erfindungsgemäß sind Haut- und Nebenzylinder vorzugsweise mechanisch so verbunden, das ein Aus- bzw. Einfahren des Hauptzylinders die Bewegung auf den Nebenzylinder übertragen wird. Der hydraulische Anschluss des Nebenzylinders erfolgt vorzugsweise auf der jeweiligen Zylinderseite, die beim Ausfahren des Hauptzylinders beim vergrößern der Presskammer das Volumen der Nebenzylinderkammer verkleinert.

Erfindungsgemäß ist der hydraulische Anschluss des Nebenzylinders, vorzugsweise über ein vorzugsweise federbelastetes Rückschlagventil mit der Hauptzylinder Ringfläche so verbunden, so das Öl in bestimmten Betriebszuständen aus dem Nebenzylinder in Richtung Hauptzylinder aber nicht zurück über das Rückschlagventil in Richtung Nebenzylinder fließen kann.

Erfindungsgemäß ist der Nebenzylinder vorzugsweise mit einem Ausgleichsvolumen zur Aufnahme von Differenzvolumen und zur Druckvorlage verbunden.

Für einen sanften Abschluss einer Dekompressionsphase kann das Sperrventil mit einer proportional zur Schaltbewegung ansteigenden Öffnungskennlinie versehen sein. Die Dekompression eines in der Kolbenkammer des Hauptzylinders eingesperrten Fluids kann jedoch auch durch Entnahme von Fluid mittels der Hydromaschine erfolgen. Von der Hydromaschine gefördertes Öl kann z.B. über ein entsperrbares Rückschlagventil oder über ein Bypassventil an den Nebenzylinder abgeführt werden.

Es zeigen:
Fig. 1 das Prinzipschaltbild eines hydraulischen Antriebs mit elektrischer Umschaltung der Betriebsarten, gemäß einem bevorzugten Ausführungsbeispiel der Erfindung im Stillstand;
Fig. 2 das Prinzipschaltbild des hydraulischen Antriebs gemäß Fig. 1 im "Eilgang" abwärts;
Fig. 3 das Prinzipschaltbild des hydraulischen Antriebs gemäß Fig. 1 im "Pressgang";
Fig. 4 das Prinzipschaltbild des hydraulischen Antriebs gemäß Fig. 1 in einer Dekompressionsphase;
Fig. 5 das Prinzipschaltbild des hydraulischen Antriebs gemäß Fig. 1 im "Eilgang" aufwärts (Rückzugsphase);
Fig. 6 das Prinzipschaltbild eines hydraulischen Antriebs mit automatischer Umschaltung der Betriebsarten, gemäß einem weiteren bevorzugten Ausführungsbeispiel der Erfindung;
Fig. 7 das Prinzipschaltbild eines hydraulischen Antriebs mit Schnellgangzylinder und automatischer Umschaltung der Betriebsarten, gemäß einem weiteren bevorzugten Ausführungsbeispiel der Erfindung; und
Fig. 8 das Prinzipschaltbild eines hydraulischen Antriebs mit Schnellgangzylinder und elektrischer Umschaltung der Betriebsarten, gemäß einem weiteren bevorzugten

Ausführungsbeispiel der Erfindung.

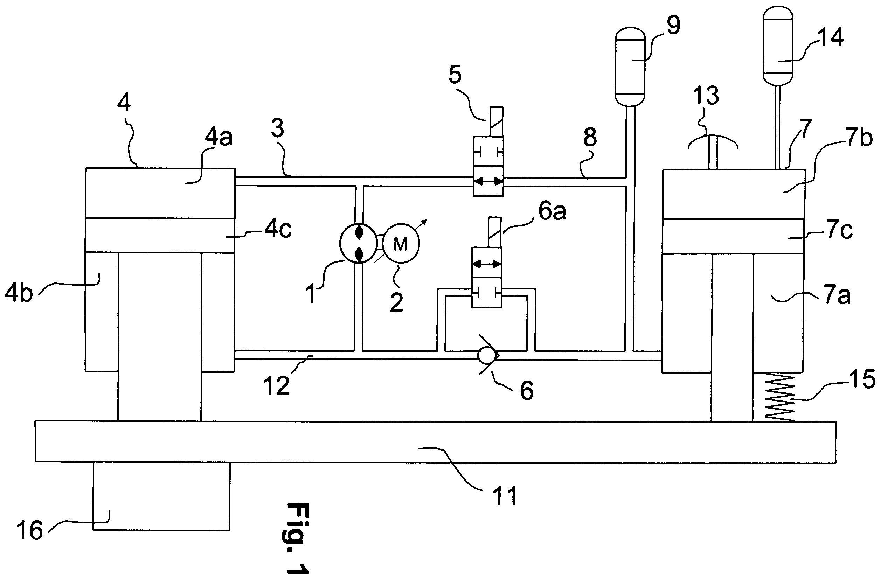

Fig. 1 zeigt das Prinzipschaltbild eines hydraulischen Antriebs gemäß einem bevorzugten ersten Ausführungsbeispiel der Erfindung im Stillstand.

Wie aus sämtlichen Figuren zu entnehmen ist, hat der erfindungsgemäße hydraulische Antrieb in Form einer drehzahlvariabel angetriebenen Hydromaschine 1 als Pumpe, die hierfür an einen Elektromotor 2. mechanisch angeschlossen ist. Die Hydromaschine 1 ist an ihren zwei Druckanschlüssen an ein hydraulisches Druckleitungssystem angeschlossen, welches einen geschlossenen Hydraulikdruckkreis bildet.

Im Konkreten ist an einen ersten Druckanschluss der Hydromaschine 1 eine Verbindungsleitung 3 angeschlossen, die direkt zu einer kolbenseitigen Druckkammer 4a eines Hauptzylinders 4 führt. An den zweiten Druckanschluss der Hydromaschine 1 ist eine zweite Leitung 12 angeschlossen, die mit einer kolbenstangenseitigen Druckkammer 4b des Hauptzylinders 4 (nachfolgend als Ringkammer 4b bezeichnet) verbunden ist.
Weiterhin ist die Rohrleitung 12 über ein Rückschlagventil 6 mit einer kolbenstangenseitigen Druckkammer 7a (nachfolgend als Ringkammer 7a bezeichnet) des Nebenzylinders 7 verbunden. Das Rückschlagventil 6 lässt nur eine Ölströmung in Richtung der Ringkammer 4b und in Richtung der Hydromaschine 1 zu. Das Rückschlagventil 6 ist durch ein Bypassventil 6a überbrückbar. Alternativ zu der Überbrückung durch ein Bypassventil 6a kann das Rückschlagventil 6 als ein entsperrbares Rückschlagventil ausgeführt sein.
Die Ringkammer 7a ist über eine weitere Rohrleitung 8 mit einem Hydraulikspeicher 9 und einem Wegeventil 5 mit der Rohrleitung 3 verbunden. Im ungeschalteten Zustand von Ventil 5, kann das Öl von Ringkammer 7a in Richtung Ringkammer 4a und in Gegenrichtung strömen.

Die Kolbenstangen des Hauptzylinders und des Nebenzylinders sind mit einer Mechanischen Verbindung 11 verbunden.

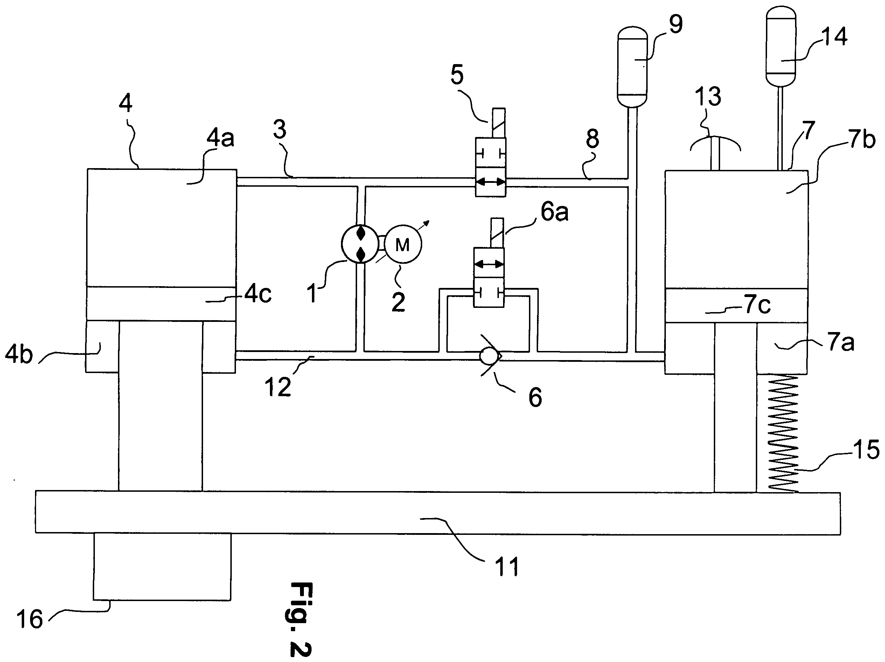

Fig. 2 zeigt das Prinzipschaltbild des hydraulischen Antriebs gemäß Fig. 1 im "Eilgang" abwärts.

Die Masse der mechanischen Verbindung 11, des Werkzeuges 16 und der Zylinderkolben erzeugen bei senkrechtem Einbau durch Gravitation einen Lastdruck in der Ringkammer 4b des Hauptkolbens dieser steht über Rohrleitung 12 auf einer Seite der Hydromaschine 1 an. Besteht nicht die Möglichkeit einen Lastdruck durch Gravitation in der Ringkammer 4b zu erzeugen, besteht alternativ die Möglichkeit mit Hilfe eines Gasdruckspeichers 14 die Druckkammer 7b des Nebenzylinders 7 mit Druck vorzugsweise mittels eines Gasdruckspeichers 14 zu beaufschlagen, oder mit Hilfe einer Federvorrichtung 15 einen Lastdruck in der Ringkammer 4b zu erzeugen.
Im Falle der Lastdruckerzeugung mit Feder oder durch Gravitation ist die Druckkammer 7b des Nebenzylinders 7 mit Hilfe einer geeigneten Belüftungsvorrichtung 13 mit Normaldruck zu versorgen.
Das Rückschlagventil 6 verhindert einen Ölstrom von der Ringkammer 4b in Richtung Ringkammer 7a.
Das Schaltventil 5 ermöglicht im ungeschalteten Zustand den Ölstrom von Ringkammer 7a in die kolbenseitigen Druckkammer 4a.
Durch Drehung des Servomotors 2 fördert die Hydromaschine 1 Öl von der Ringkammer 4b in die kolbenseitigen Druckkammer 4a. Über die mechanischen Verbindung 11 bewegt sich der Kolben des Nebenzylinders parallel zum Kolben des Hauptzylinders.
Da die Kolbenfläche des Kolbenraumes 4b wesentlich keiner ist als die Druckkammerfläche der Druckkammer 4a, fließt das verdrängte Öl aus der kleiner werdenden Ringkammer 7a über die Rohrleitung 8 über das Ventil 5 in die Druckkammer 4a.

Die Fläche der Ringkammer 4b in Addition mit der Fläche der Ringkammer 7a sind annähernd flächengleich mit der Kolbenfläche 4a, so dass das die Volumen aus Ringkammer 4b und Ringkammer 7a in Druckkammer 4a fließen. Auftretende Volumendifferenzen werden vom Ausgleichsvolumen 9 aufgenommen oder abgegeben. Fällt der der Druck in der Rohrleitung 12 auf einen kritischen Punkt, in der durch Ölmangel Kavitation entstehen kann, hält der Ausgleichsvolumen 9 den Druck über das Rückschlagventil 6 aufrecht.
Der Zylinder 4 kann durch den Servomotor 2 geregelt im Eilgang herunter gefahren werden.

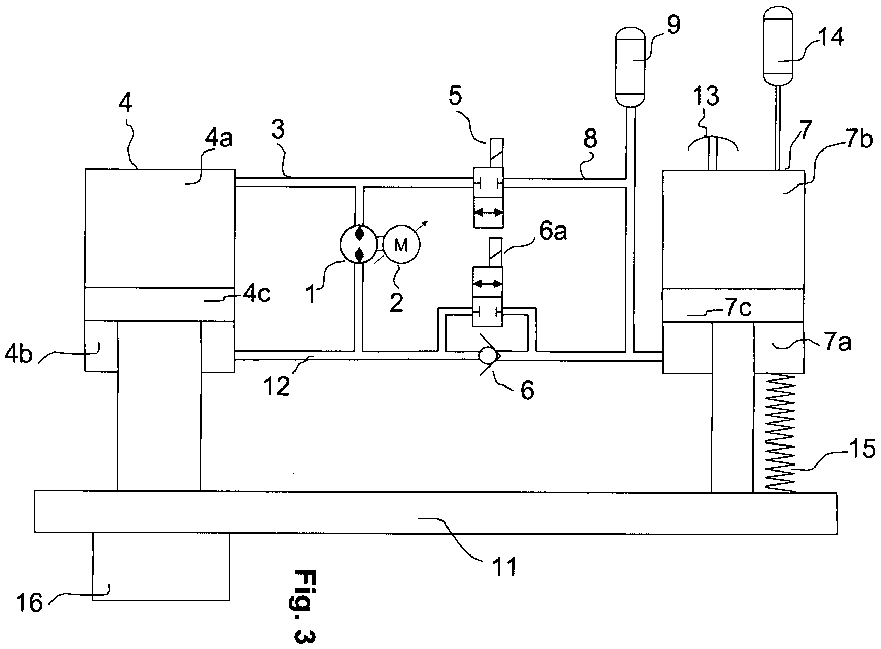

Fig. 3 zeigt das Prinzipschaltbild des hydraulischen Antriebs gemäß Fig. 1 im "Pressgang".

Nach Erreichen der Position Pressbeginn, schaltete das Ventil 5 in die Gesperrte Position. Das zum pressen benötigte Ölvolumen wir über die Rohrleitung 12 der Ringkammer 4b des Hauptkolbens entnommen und für den Pressvorgang mittels der Hydromaschine 1 in die Druckkammer 4a gepresst. Fällt der der Druck in der Rohrleitung 12 auf einen kritischen Punkt, in der durch Ölmangel Kavitation entstehen kann, füllt zusätzlich die Ringkammer 7a bzw. der Ausgleichsvolumen 9 Öl über das Rückschlagventil 6 in die Rohrleitung 12. Überschüssiges Öl wird im Hydraulikspeicher zwischengespeichert.
Der Zylinder 4 kann durch den Servomotor 2 im Pressgang mit geringer Geschwindigkeit und hoher Kraft geregelt gefahren werden. (Pressvorgang)

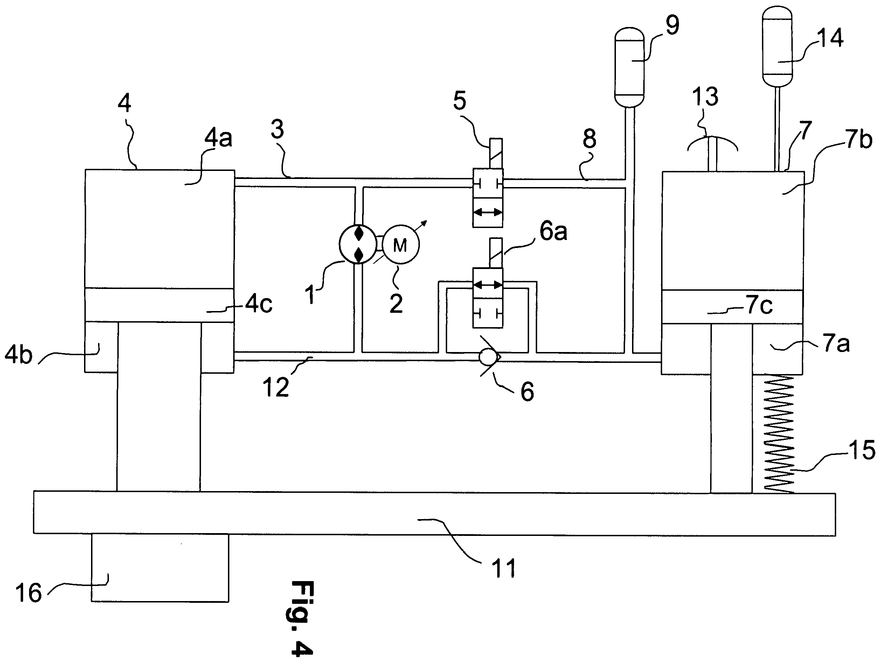

Fig. 4 zeigt das Prinzipschaltbild des hydraulischen Antriebs gemäß Fig. 1 in der Dekompressionsphase.

Durch Schalten des Ventils 6a oder ggf. durch ein Entsperren des Ventils 6 wird die Sperrfunktion des Ventils 6 aufgehoben. Das in der Druckkammer 4a des Hauptzylinders 4 unter Druck eingesperrte Fluid wird über die Hydromaschine 1 mittels des Servomotors 2 geregelt in das Ausgleichsvolumen 9 entspannt.

Die Dekompression des Fluids in der kolbenseitigen Druckkammer 4a kann alternativ durch Öffnen des Ventils 5 erfolgen. Um eine kontrollierte, weiche Dekompression auszuführen, sollte das Ventil 5 in diesem Fall als Proportionalventil ausgeführt sein, so dass es in der Dekompressionsphase zunächst einen kleinen Öffnungsquerschnitt bereitstellen kann. Allerdings geht die Dekompressionsenergie in diesem Fall in Form von Drosselverlusten verloren.

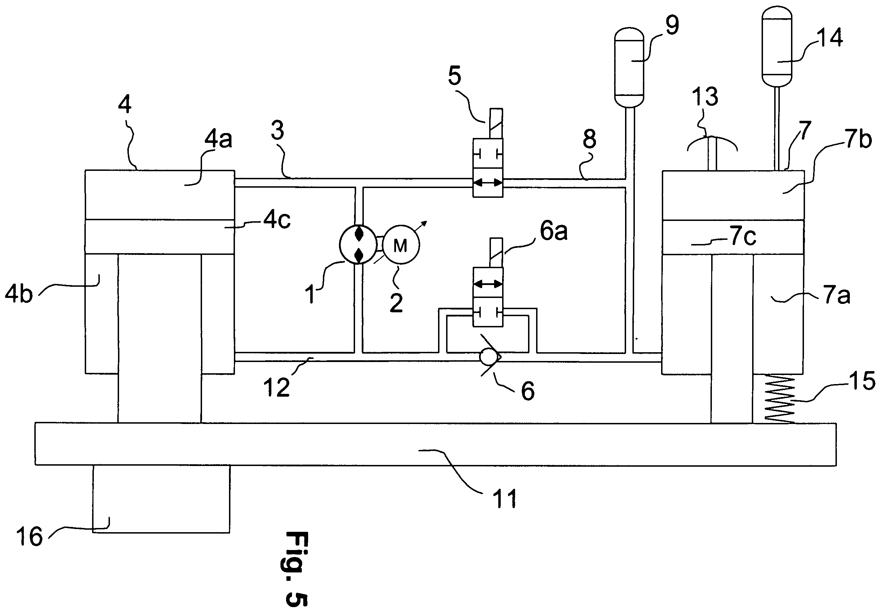

Fig. 5 zeigt das Prinzipschaltbild des hydraulischen Antriebs gemäß Fig. 1 im "Eilgang" aufwärts (Rückzugsphase).

Das Ventil 6a wird wieder in die gesperrte Stellung geschaltet. Das Ventil 5 wird wieder in die geöffnete Stellung gebracht.
Durch Drehen des Servomotors 2 in entsprechender Richtung - entgegengesetzt zu der im Eilgang und Pressgang verwendeten Richtung - fördert die Hydromaschine 1 Öl aus der Druckkammer 4a in die Ringkammer 4b. Überschüssiges Öl aus der Druckkammer 4a strömt über das Ventil 5 in die größer werdende Ringkammer 7a des Nebenzylinders. Eine eventuelle Differenzmenge an überschüssigem Öl wird durch den Hydraulikspeicher 9 ausgeglichen.

Der Zylinder 4 kann durch den Servomotor 2 geregelt im Eilgang in Anfangsposition gefahren werden.

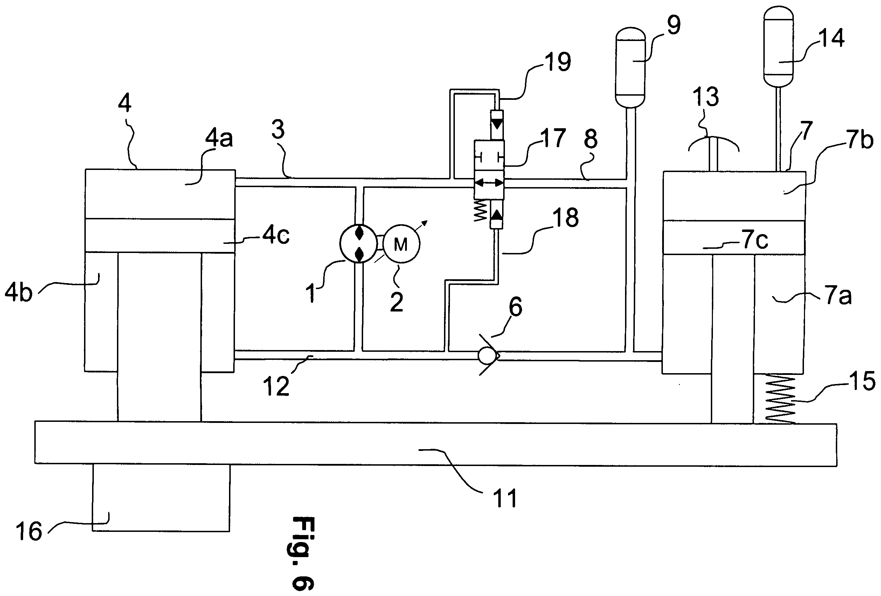

Fig. 6 zeigt das Prinzipschaltbild eines hydraulischen Antriebs gemäß einem zweiten bevorzugten Ausführungsbeispiel der Erfindung im Stillstand.

Wie aus sämtlichen Figuren zu entnehmen ist, hat der erfindungsgemäße hydraulische Antrieb in Form einer drehzahlvariabel angetriebenen Hydromaschine 1 als Pumpe, die hierfür an einen Elektromotor 2. mechanisch angeschlossen ist. Die Hydromaschine 1 ist an ihren zwei Druckanschlüssen an ein hydraulisches Druckleitungssystem angeschlossen, welches einen geschlossenen Hydraulikdruckkreis bildet.

Im Konkreten ist an einen ersten Druckanschluss der Hydromaschine 1 eine Verbindungsleitung 3 angeschlossen, die direkt zu einer kolbenseitigen Druckkammer 4a eines Hauptzylinders 4 führt. An den zweiten Druckanschluss der Hydromaschine 1 ist eine zweite Leitung 12 angeschlossen, die mit einer kolbenstangenseitigen Druckkammer 4b des Hauptzylinders 4 (nachfolgend als Ringkammer 4b bezeichnet) verbunden ist.
Weiterhin ist die Rohrleitung 12 über ein Rückschlagventil 6 mit einer kolbenstangenseitigen Druckkammer 7a (nachfolgend als Ringkammer 7a bezeichnet) des Nebenzylinders 7 verbunden. Das Rückschlagventil 6 lässt nur eine Ölströmung in Richtung der Ringkammer 4b und in Richtung der Hydromaschine 1 zu.
Die Ringkammer 7a ist über eine weitere Rohrleitung 8 mit einem Hydraulikspeicher 9 und einem federbelasteten Wegeventil 17 mit der Rohrleitung 3 verbunden. Das Wegeventil 17 ist über eine Steuerleitung 18 mit der Rohrleitung 12 verbunden. Im ungeschalteten Zustand ist Ventil 17 federbelastet und über Steuerölleitung18 mit Lastdruck aufgesteuert. Es kann Öl von Ringkammer 7a in Richtung Ringkammer 4a und in Gegenrichtung strömen.

Die Kolbenstangen des Hauptzylinders und des Nebenzylinders sind mit einer Mechanischen Verbindung 11 verbunden.

Betriebsart "Eilgang" abwärts:
Die Masse der mechanischen Verbindung 11, des Werkzeuges 16 und der Zylinderkolben erzeugen bei senkrechtem Einbau durch Gravitation einen Lastdruck in der Ringkammer 4b des Hauptkolbens dieser steht über Rohrleitung 12 auf einer Seite der Hydromaschine 1 an. Besteht nicht die Möglichkeit einen Lastdruck durch Gravitation in der Ringkammer 4b zu erzeugen, besteht alternativ die Möglichkeit mit Hilfe eines Gasdruckspeichers 14 die Druckkammer 7b des Nebenzylinders 7 mit Druck vorzugsweise mittels eines Gasdruckspeichers 14 zu beaufschlagen, oder mit Hilfe einer Federvorrichtung 15 einen Lastdruck in der Ringkammer 4b zu erzeugen.
Im Falle der Lastdruckerzeugung mit Feder oder durch Gravitation ist die Druckkammer 7b des Nebenzylinders 7 mit Hilfe einer geeigneten Belüftungsvorrichtung 13 mit Normaldruck zu versorgen.
Das Rückschlagventil 6 verhindert einen Ölstrom von der Ringkammer 4b in Richtung Ringkammer 7a.
Das Ventil 17 ist federbelastet über Steuerölleitung18 und Feder mit Lastdruck aufgesteuert. Durch Drehung des Servomotors 2 fördert die Hydromaschine 1 Öl von der Ringkammer 4b in die
kolbenseitigen Druckkammer 4a. Über die mechanischen Verbindung 11 bewegt sich der Kolben des Nebenzylinders parallel zum Kolben des Hauptzylinders.
Da die Kolbenfläche des Kolbenraumes 4b wesentlich keiner ist als die Druckkammerfläche der Druckkammer 4a, fließt das verdrängte Öl aus der kleiner werdenden Ringkammer 7a über die Rohrleitung 8 über das Ventil 5 in die Druckkammer 4a.
Die Fläche der Ringkammer 4b in Addition mit der Fläche der Ringkammer 7a sind annähernd flächengleich mit der Kolbenfläche 4a, so dass das die Volumen aus Ringkammer 4b und Ringkammer 7a in Druckkammer 4a fließen. Auftretende Volumendifferenzen werden vom Ausgleichsvolumen 9 aufgenommen oder abgegeben. Fällt der der Druck in der Rohrleitung 12 auf einen kritischen Punkt, in der durch Ölmangel Kavitation entstehen kann, hält der Ausgleichsvolumen 9 den Druck über das Rückschlagventil 6 aufrecht.
Der Zylinder 4 kann durch den Servomotor 2 geregelt im Eilgang herunter gefahren werden.

Betriebsart "Pressgang":
Nach schließen des Werkzeuges 16 baut sich ein Pressdruck in der Druckkammer 4a auf. Der steigende Druck in der Rohrleitung 3 schließt über die Steuerleitung 19 das Ventil 17. Das zum pressen benötigte Ölvolumen wir über die Rohrleitung 12 der Ringkammer 4b des Hauptkolbens entnommen und für den Pressvorgang mittels der Hydromaschine 1 in die Druckkammer 4a gepresst. Fällt der der Druck in der Rohrleitung 12 auf einen kritischen Punkt, in der durch Ölmangel Kavitation entstehen kann, füllt zusätzlich die Ringkammer 7a bzw. der Ausgleichsvolumen 9 Öl über das Rückschlagventil 6 in die Rohrleitung 12. Überschüssiges Öl wird im Hydraulikspeicher zwischengespeichert.
Der Zylinder 4 kann durch den Servomotor 2 im Pressgang mit geringer Geschwindigkeit und hoher Kraft geregelt gefahren werden. (Pressvorgang)

Betriebsart Dekompressionsphase:
Durch Rückwärtsdrehen des Servomotors 2 und der Hydromaschine 1 wird ein Druckausgleich zwischen Druckkammer 4a und Ringkammer 4b hergestellt. Durch den Druckausgleich in der Steuerölleitung 18 und Steuerölleitung 19 öffnet das Ventil 17. Das Kompressionsvolumen strömt in den Hydraulikspeicher 9.

Betriebsart "Eilgang" aufwärts (Rückzugsphase):
Durch Drehen des Servomotors 2 in Gegenrichtung fördert die Hydromaschine 1 Öl aus der Druckkammer 4a in die Ringkammer 4b. Überschüssiges Öl aus der Druckkammer 4a strömt über das Ventil 17 in die größer werdende Ringkammer 7a des Nebenzylinders. Überschüssiges Öl wird im Hydraulikspeicher zwischengespeichert.
Der Zylinder 4 kann durch den Servomotor 2 geregelt im Eilgang in Anfangsposition gefahren werden.

In der Ausführungsform gemäß Fig. 1 bis Fig. 6 summieren sich wie bereits angedeutet die an den jeweiligen Kolben mit Fluid beaufschlagten Flächen in Kammer 4b und in Kammer 7a zur Kolbenfläche in Kammer 4a. Gewisse Flächenunterschiede sind zulässig und können über Hydrospeicher, z.B. Speicher 9 ausgeglichen werden.
Das Verhältnis zwischen den Kolbenflächen auf Zylinderseite und Stangenseite von Kolben 4c - also der Fläche in Kammer 4a und in Kammer 4b - ist im Prinzip frei wählbar und kann z.B. 10 zu 1 betragen. Dann wäre das Verhältnis zwischen Kolbenfläche in Kammer 4b und in Kammer 7a folglich 1 zu 9.

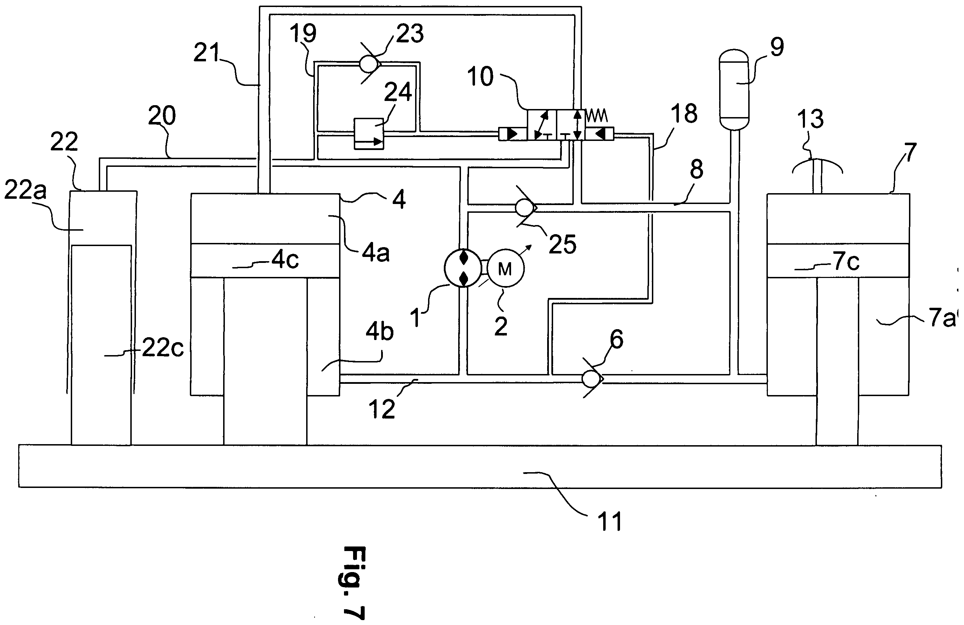

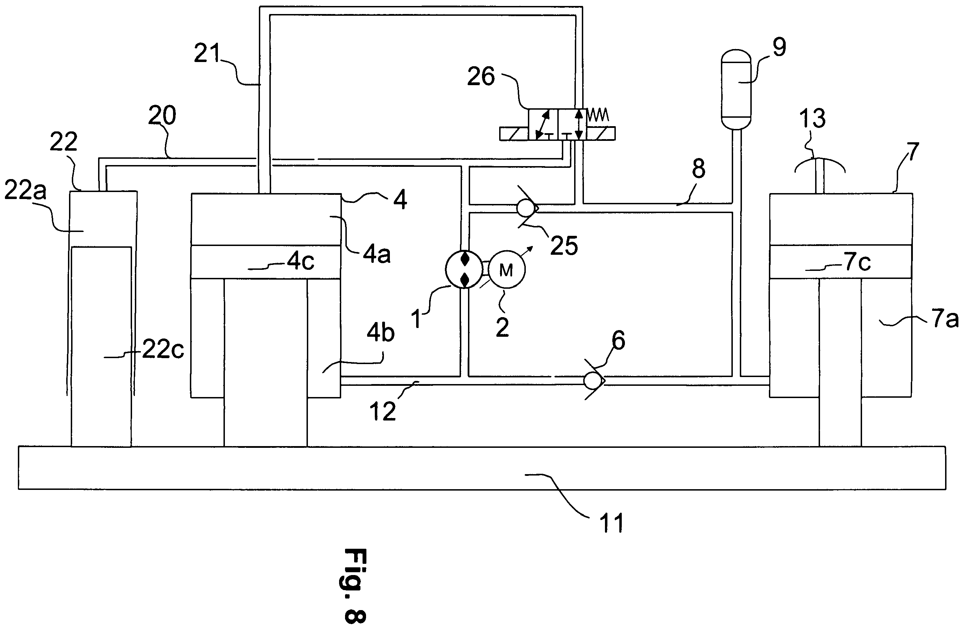

Weitere Ausführungsbeispiele gemäß Fig. 7 und Fig.8:
Weitere bevorzugte Ausführungsbeispiele sind in den Figuren 7 und 8 gezeigt. Insbesondere besitzen diese hydraulischen Antriebe einen Schnellgangzylinder 22, durch den eine Abwärtsbewegung der mechanischen Verbindung 11, bzw. des Presswerkzeugs 16 oder
eines Werkzeugträgers aktiv bewerkstelligt wird. Dazu kann insbesondere Fluid aus der Kammer 4b durch die Hydromaschine 1 in die Kammer 22a gefördert werden. Die Füllung der Zylinderkammer 4a erfolgt über das Ventil 10 bzw. 26 in der federbelasteten Grundstellung aus der Kammer 7a. Im Pressgang sperrt das Ventil 10 bzw. das Ventil 26 die Verbindung zwischen Zylinderkammer 4a und der Ringkammer 7a und gibt stattdessen eine Verbindung zwischen der Hydromaschine 1 und der Zylinderkammer 4a frei. Dann kann mittels der Hydromaschine 1 der Pressdruck in der Zylinderkammer 4a aufgebaut werden.

In den Ausführungsformen gemäß Fig. 7 und Fig. 8 entspricht die an den jeweiligen Kolben mit Fluid beaufschlagte Fläche in Kammer 4a der Kolbenfläche in Kammer 7a und die Kolbenfläche in Kammer 22a der Kolbenfläche in Kammer 4b. Gewisse Flächenunterschiede sind zulässig und können über Hydrospeicher, z.B. Speicher 9 ausgeglichen werden.

Das Verhältnis zwischen den Kolbenflächen auf Zylinderseite und Stangenseite von Kolben 4c - also der Fläche in Kammer 4a und in Kammer 4b - ist im Prinzip frei wählbar und kann z.B. 2 zu 1 betragen.

Die vorangehend beschriebenen Ausführungsbeispiele und Figuren dienen lediglich dem besseren Verständnis der vorliegenden Erfindung, sie schränken die Erfindung nicht etwa auf die Ausführungsbeispiele ein.

### Bezugszeichenliste

- **1**: Hydromaschine
- **2**: Servomotor (drehzahlvariabel)
- **3**: Verbindungsleitung
- **4**: Hauptzylinder
- **4a**: Kolbenkammer
- **4b**: Ringkammer
- **4c**: Kolben
- **5**: Ventil
- **6**: Rückschlagventil
- **6a**: Ventil
- **7**: Nebenzylinder
- **7a**: Ringkammer
- **7b**: Kolbenkammer
- **7c**: Kolben
- **8**: Verbindungsleitung
- **9**: Ausgleichsvolumen
- **10**: 3-Wege Ventil
- **11**: Masse
- **12**: Verbindungsleitung
- **13**: Belüftungsvorrichtung
- **14**: Gasdruckspeicher
- **15**: Federvorrichtung
- **16**: Werkzeug
- **17**: Ventil
- **18**: Steuerleitung
- **19**: Steuerleitung
- **20**: Verbindungsleitung
- **21**: Verbindungsleitung
- **22**: Eilgangzylinder
- **22a**: Kolbenkammer Eilgangzylinder
- **22c**: Plungerkolben
- **23**: Rückschlagventil
- **24**: Druckventil
- **25**: Rückschlagventil
- **26**: 3-Wege Magnetventil

## Patentansprüche

1. Hydraulische Achse insbesondere zum Antrieb einer Presse, insbesondere einer Biege-Richtpresse, einer Abkantpresse, oder einer Rohrbiegepresse, umfassend einen Hydrozylinder (4) - dieser besitzt eine Zylinderkammer (4a) und eine Ringkammer (4b), die durch einen Zylinderkolben (4c) voneinander abgegrenzt sind - und eine hydraulische Steuerungsanordnung, durch welche der Hydrozylinder (4) in einer Eilhubbewegung und in einer Krafthubbewegung ansteuerbar ist, wobei die Steuerungsanordnung umfasst:
eine Hydromaschine (1), welche in Ihrer Förderrichtung umsteuerbar ist, diese ist fluidisch mit der Ringkammer (4b) verbunden,
einen Fluidbehälter (7),
ein Sperrventil (5), durch welches eine Verbindung zwischen dem Fluidbehälter (7, 7a) und der Zylinderkammer (4a) sperrbar und freigebbar ist,
wobei der Fluidbehälter (7) eine Kammer (7a) mit verstellbaren Volumen aufweist, dergestalt, dass eine Verkleinerung dieses Volumens eine Verdrängung von Fluid aus dem Fluidbehälter (7) zur Folge hat, und
wobei ein Volumenverstellelement (7c) des Fluidbehälters (7) mechanisch an den Zylinderkolben (4c) gekoppelt ist,
**gekennzeichnet durch** ein Nachsaugventil (6), welches aufgrund seiner Anordnung ein Nachsaugen von Fluid aus dem Fluidbehälter (7, 7a) an den mit der Ringkammer (4b) verbundenen Anschluss der Hydromaschine (1) erlaubt.

2. Hydraulische Achse gemäß Anspruch 1, wobei ein elektrischer Antriebsmotor (2) vorgesehen ist, um die Hydromaschine (1) drehzahlvariabel und insbesondere drehrichtungsumkehrbar anzusteuern.

3. Hydraulische Achse gemäß Anspruch 1 oder 2, wobei das Sperrventil (5) als hydraulisch gesteuertes Ventil oder als elektromagnetisch betätigtes Ventil ausgebildet ist.

4. Hydraulische Achse gemäß mindestens einem der vorangehenden Ansprüche, **dadurch gekennzeichnet, dass** ein erster Druckanschluss der Hydromaschine (1) an der kolbenstangenseitigen Ringkammer (4b) des Hydrozylinders (4) angeschlossen ist und dass ein zweiter Druckanschluss der Hydromaschine (1) an der Zylinderkammer (4a) des Hydrozylinders (4) angeschlossen ist.

5. Hydraulische Achse gemäß mindestens einem der vorangehenden Ansprüche, **dadurch gekennzeichnet, dass** das Nachsaugventil (6) als Rückschlagventil, insbesondere als federbelastetes Rückschlagventil, insbesondere als entsperrbares Rückschlagventil, ausgebildet ist.

6. Hydraulische Achse gemäß Anspruch 5, **dadurch gekennzeichnet, dass** parallel zu dem Nachsaugventil (6) ein Bypassventil (6a) ausgebildet ist.

7. Hydraulische Achse gemäß mindestens einem der vorangehenden Ansprüche, **dadurch gekennzeichnet, dass** an einem Anschluss des Fluidbehälters (7, 7a) ein Ausgleichsvolumen, insbesondere ein Hydrospeicher (9) zum Ausgleich von Volumendifferenzen angeschlossen ist.

8. Hydraulische Achse gemäß mindestens einem der vorangehenden Ansprüche, **dadurch gekennzeichnet, dass** in einer fluidischen Verbindung zwischen der Hydromaschine (1) und der Ringkammer (4b) allenfalls Sicherheitsventile, insbesondere Hochhalteventile, angeordnet sind, welche in einem Normalbetrieb offen sind.

9. Hydraulische Achse gemäß mindestens einem der vorangehenden Ansprüche, **dadurch gekennzeichnet, dass** das Sperrventil (10, 17) als hydraulisch gesteuertes Ventil ausgebildet ist, und dass dieses Sperrventil (10, 17) in Abhängigkeit von einer Druckdifferenz über der Hydromaschine (1), welche über Steuerleitungen (18, 19) erfasst wird, eine Sperrstellung oder eine Freigabestellung einnimmt.

10. Hydraulische Achse nach Anspruch 9, **dadurch gekennzeichnet, dass** das Sperrventil (10, 17) sich in der Freigabestellung befindet, wenn ein Druck am ringkammerseitigen Anschluss der Hydromaschine (1) einen Druck am anderen Anschluss überwiegt, und wobei insbesondere das Sperrventil in die Sperrstellung schaltet, sobald der Druck am anderen Anschluss den Druck am ringkammerseitigen Anschluss übersteigt.

11. Hydraulische Achse nach Anspruch 9 oder 10, **dadurch gekennzeichnet, dass** die Freigabestellung des Sperrventils (10, 17) die federbelastete Grundstellung ist, wobei insbesondere das Druckäquivalent der Federbelastung im Bereich um 2 bar liegt.

12. Hydraulische Achse gemäß mindestens einem der vorangehenden Ansprüche, **dadurch gekennzeichnet, dass** ein Hilfszylinder (22) vorhanden ist, welcher aufgrund seiner Anordnung eine Ausfahrbewegung des Hydrozylinders (4) unterstützen kann, und dass die Hydromaschine (1) zwischen die Ringkammer (4b) des Hydrozylinders (1) und eine in Ausfahrrichtung des Hydrozylinders wirksame Zylinderkammer (22a) des Hilfszylinders (22) geschaltet ist.

13. Hydraulische Achse gemäß mindestens einem der vorangehenden Ansprüche, **dadurch gekennzeichnet, dass** ein Vorspannelement vorgesehen ist, welches bezüglich einer Ausfahrrichtung des Hydrozylinders (1) wirksam ist, insbesondere eine mechanische Feder (15), insbesondere eine hydromechanische Feder (14), insbesondere eine vertikal beweglich angeordnete mit dem Hydrozylinder gekoppelte Masse.

14. Hydraulische Achse gemäß mindestens einem der vorangehenden Ansprüche, **dadurch gekennzeichnet, dass** der Fluidbehälter (7) ein Zylinderspeicher ist, wobei insbesondere dessen Kolben (7c) mit dem Kolben (4c) des Hydrozylinders (4) mechanisch gekoppelt ist, wobei insbesondere die mechanische Kopplung in Ausfahrrichtung auf Zug starr ist.

15. Hydraulische Achse gemäß mindestens einem der vorangehenden Ansprüche, **dadurch gekennzeichnet, dass** in einer Ausfahrbewegung des Hydrozylinders (4) eine Fluidverdrängungsmenge des Fluidbehälters (7), welche durch die mechanischen Kopplung des Volumenverstellelements (7c) an den Kolben (4c) des Hydrozylinders (4) bedingt ist, im Wesentlichen einer Fluidaufnahmemenge des Hydrozylinders (4) entspricht.

16. Hydraulische Achse nach Anspruch 15, **dadurch gekennzeichnet, dass** die Fluidverdrängungsmenge des Fluidbehälters (7) zusammen mit der Fluidverdrängungsmenge der Ringkammer (4b) mindestens 70%, 80%, 90%, 95% oder 99% der Fluidaufnahmemenge der Zylinderkammer (4a) des Hydrozylinders (4) beträgt, und dass ein Speicher (9) zur Bereitstellung der Differenzmenge vorgesehen ist.

17. Hydraulische Achse nach Anspruch 12, **dadurch gekennzeichnet, dass** das Sperrventil (10, 26) ebenfalls eine Verbindung zwischen der Hydromaschine (1) und der Zylinderkammer (4a) gegensinnig zur Verbindung zwischen dem Fluidbehälter (7) und der Zylinderkammer (4a) steuert.

18. Hydraulische Achse gemäß mindestens einem der vorangehenden Ansprüche, **dadurch gekennzeichnet, dass** die Hydromaschine (1) als Hydromaschine mit verstellbarem Fördervolumen ausgebildet ist, wobei insbesondere die Förderrichtung mittels der Verstellung des Fördervolumens bei gleichbleibender Drehrichtung umkehrbar ist..

## Claims

1. Hydraulic axis, in particular for driving a press, in particular a bending/straightening press, a folding press or a pipe bending press, comprising a hydraulic cylinder (4), which has a cylinder chamber (4a) and an annular chamber (4b) which are delimited from one another by way of a cylinder piston (4c), and a hydraulic control arrangement, by way of which the hydraulic cylinder (4) can be actuated in a fast stroke movement and in a power stroke movement, the control arrangement comprising:
a hydraulic machine (1), the delivery direction of which can be switched over in a controlled manner, which hydraulic machine (1) is connected fluidically to the annular chamber (4b),
a fluid container (7),
a shut-off valve (5), by way of which a connection between the fluid container (7, 7a) and the cylinder chamber (4a) can be shut off and opened,
the fluid container (7) having a chamber (7a) with an adjustable volume in such a way that a reduction in the size of the said volume results in a displacement of fluid out of the fluid container (7), and
a volume adjusting element (7c) of the fluid container (7) being coupled mechanically to the cylinder piston (4c),
**characterized by** a replenishing valve (6) which, on account of its arrangement, permits replenishing of fluid from the fluid container (7, 7a) to that connector of the hydraulic machine (1) which is connected to the annular chamber (4b).

2. Hydraulic axis according to Claim 1, an electric drive motor (2) being provided, in order to actuate the hydraulic machine (1) at a variable rotational speed and, in particular, such that the rotational direction can be reversed.

3. Hydraulic axis according to Claim 1 or 2, the shut-off valve (5) being configured as a hydraulically controlled valve or as an electromagnetically actuated valve.

4. Hydraulic axis according to at least one of the preceding claims, **characterized in that** a first pressure connector of the hydraulic machine (1) is connected to the piston rod-side annular chamber (4b) of the hydraulic cylinder (4), and **in that** a second pressure connector of the hydraulic machine (1) is connected to the cylinder chamber (4a) of the hydraulic cylinder (4).

5. Hydraulic axis according to at least one of the preceding claims, **characterized in that** the replenishing valve (6) is configured as a check valve, in particular as a spring-loaded check valve, in particular as an unlockable check valve.

6. Hydraulic axis according to Claim 5, **characterized in that** a bypass valve (6a) is configured parallel to the replenishing valve (6).

7. Hydraulic axis according to at least one of the preceding claims, **characterized in that** an equalizing volume, in particular a hydraulic accumulator (9) for equalizing volume differences, is connected to a connector of the fluid container (7, 7a).

8. Hydraulic axis according to at least one of the preceding claims, **characterized in that** safety valves, in particular high retaining valves, which are open during normal operation are arranged if need be in a fluidic connection between the hydraulic machine (1) and the annular chamber (4b).

9. Hydraulic axis according to at least one of the preceding claims, **characterized in that** the shut-off valve (10, 17) is configured as a hydraulically controlled valve, and **in that** the said shut-off valve (10, 17) assumes a shut-off position or an open position in a manner which is dependent on a pressure difference across the hydraulic machine (1), which pressure difference is detected via control lines (18, 19).

10. Hydraulic axis according to Claim 9, **characterized in that** the shut-off valve (10, 17) is situated in the open position if a pressure at the annular chamber-side connector of the hydraulic machine (1) outbalances a pressure at the other connector, and, in particular, the shut-off valve switching into the shut-off position as soon as the pressure at the other connector exceeds the pressure at the annular chamber-side connector.

11. Hydraulic axis according to Claim 9 or 10, **characterized in that** the open position of the shut-off valve (10, 17) is the spring-loaded basic position, the pressure equivalent of the spring loading, in particular, lying in the range around 2 bar.

12. Hydraulic axis according to at least one of the preceding claims, **characterized in that** there is an auxiliary cylinder (22) which, on account of its arrangement, can assist an extension movement of the hydraulic cylinder (4), and **in that** the hydraulic machine (1) is connected between the annular chamber (4b) of the hydraulic cylinder (1) and a cylinder chamber (22a) of the auxiliary cylinder (22), which cylinder chamber (22a) acts in the extension direction of the hydraulic cylinder.

13. Hydraulic axis according to at least one of the preceding claims, **characterized in that** a prestressing element is provided which is active with regard to an extension direction of the hydraulic cylinder (1), in particular a mechanical spring (15), in particular a hydromechanical spring (14), in particular a mass which is coupled to the hydraulic cylinder and is arranged such that it can be moved vertically.

14. Hydraulic axis according to at least one of the preceding claims, **characterized in that** the fluid container (7) is a cylinder accumulator, its piston (7c), in particular, being coupled mechanically to the piston (4c) of the hydraulic cylinder (4), the mechanical coupling, in particular, being unyielding to a tensile load in the extension direction.

15. Hydraulic axis according to at least one of the preceding claims, **characterized in that**, in an extension movement of the hydraulic cylinder (4), a fluid displacement quantity of the fluid container (7) which is brought about by way of the mechanical coupling of the volume adjusting element (7c) to the piston (4c) of the hydraulic cylinder (4) corresponds substantially to a fluid intake quantity of the hydraulic cylinder (4).

16. Hydraulic axis according to Claim 15, **characterized in that** the fluid displacement quantity of the fluid container (7), together with the fluid displacement quantity of the annular chamber (4b), is at least 70%, 80%, 90%, 95% or 99% of the fluid intake quantity of the cylinder chamber (4a) of the hydraulic cylinder (4), and **in that** an accumulator (9) is provided for supplying the differential quantity.

17. Hydraulic axis according to Claim 12, **characterized in that** the shut-off valve (10, 26) likewise controls a connection between the hydraulic machine (1) and the cylinder chamber (4a) inversely to the connection between the fluid container (7) and the cylinder chamber (4a).

18. Hydraulic axis according to at least one of the preceding claims, **characterized in that** the hydraulic machine (1) is configured as a hydraulic machine with an adjustable delivery volume, it being possible, in particular, for the delivery direction to be reversed by means of the adjustment of the delivery volume with an unchanging rotational direction.

## Revendications

1. Essieu hydraulique en particulier pour l'entraînement d'une presse, en particulier d'une presse à plier et à dresser, une presse plieuse ou une presse à cintrer les tubes, comprenant un cylindre hydraulique (4) - celui-ci possède une chambre cylindrique (4a) et une chambre annulaire (4b), qui sont séparées l'une de l'autre par un piston cylindrique (4c) - et un dispositif de commande hydraulique, par lequel le cylindre hydraulique (4) peut être commandé dans un mouvement de levage d'urgence et dans un mouvement de levage de force, dans lequel le dispositif de commande hydraulique comprend:
une machine hydraulique (1), dont le sens de transport peut être inversé et qui est en communication fluidique avec la chambre annulaire (4b),
un réservoir de fluide (7),
une vanne d'arrêt (5), par laquelle une communication entre le réservoir de fluide (7, 7a) et la chambre cylindrique (4a) peut être interrompue ou libérée,
dans lequel le réservoir de fluide (7) présente une chambre (7a) à volume réglable, de telle manière qu'une diminution de ce volume ait pour conséquence un refoulement de fluide hors du réservoir de fluide (7), et
dans lequel un élément de réglage de volume (7c) du réservoir de fluide (7) est couplé mécaniquement au piston cylindrique (4c),
**caractérisé par** une soupape de ré-aspiration (6), qui en raison de sa disposition permet une ré-aspiration de fluide hors du réservoir de fluide (7, 7a) au raccord de la machine hydraulique (1) relié à la chambre annulaire (4b).

2. Essieu hydraulique selon la revendication 1, dans lequel il est prévu un moteur d'entraînement électrique (2), afin de commander la machine hydraulique (1) avec une vitesse variable et en particulier avec inversion du sens de rotation.

3. Essieu hydraulique selon la revendication 1 ou 2, dans lequel la vanne d'arrêt (5) est constituée par une vanne à commande hydraulique ou une vanne à actionnement électromagnétique.

4. Essieu hydraulique selon au moins une des revendications précédentes, **caractérisé en ce qu'**un premier raccord de pression de la machine hydraulique (1) est raccordé à la chambre annulaire côté tige de piston (4b) du cylindre hydraulique (4) et **en ce qu'**un deuxième raccord de pression de la machine hydraulique (1) est raccordé à la chambre cylindrique (4a) du cylindre hydraulique (4).

5. Essieu hydraulique selon au moins une des revendications précédentes, **caractérisé en ce que** la soupape de ré-aspiration (6) est réalisée sous forme de clapet antiretour, en particulier de clapet antiretour à ressort, et en particulier de clapet antiretour déblocable.

6. Essieu hydraulique selon la revendication 5, **caractérisé en ce qu'**une vanne de dérivation (6a) est montée en parallèle à la soupape de ré-aspiration (6).

7. Essieu hydraulique selon au moins une des revendications précédentes, **caractérisé en ce qu'**un volume d'équilibrage, en particulier un volume hydraulique (9) est raccordé à un raccord du réservoir de fluide (7, 7a) en vue de l'équilibrage de différences de volume.

8. Essieu hydraulique selon au moins une des revendications précédentes, **caractérisé en ce que** des soupapes de sécurité, en particulier des soupapes à tenue élevée, qui sont ouvertes en fonctionnement normal, sont tout au plus disposées dans une communication fluidique entre la machine hydraulique (1) et la chambre annulaire (4b).

9. Essieu hydraulique selon au moins une des revendications précédentes, **caractérisé en ce que** la vanne d'arrêt (10, 17) est constituée par une vanne à commande hydraulique, et **en ce que** cette vanne d'arrêt (10, 17) prend une position d'arrêt ou une position de libération en fonction d'une différence de pression de part et d'autre de la machine hydraulique (1), qui est détectée par des conduites de commande (18, 19).

10. Essieu hydraulique selon la revendication 9, **caractérisé en ce que** la vanne d'arrêt (10, 17) se trouve dans la position de libération, lorsqu'une pression au raccord côté chambre annulaire de la machine hydraulique (1) dépasse une pression à l'autre raccord, et dans lequel en particulier la vanne d'arrêt bascule dans la position d'arrêt, dès que la pression à l'autre raccord dépasse la pression au raccord côté chambre annulaire.

11. Essieu hydraulique selon la revendication 9 ou 10, **caractérisé en ce que** la position de libération de la vanne d'arrêt (10, 17) est la position de base sous la charge du ressort, dans lequel en particulier la pression équivalente à la charge du ressort se situe aux environs de 2 bar.

12. Essieu hydraulique selon au moins une des revendications précédentes, **caractérisé en ce qu'**il se trouve un cylindre auxiliaire (22), qui en raison de sa disposition peut assister un mouvement de sortie du cylindre hydraulique (4), et **en ce que** la machine hydraulique (1) est connectée entre la chambre annulaire (4b) du cylindre hydraulique (1) et une chambre cylindrique (22a) du cylindre auxiliaire (22) active dans la direction de sortie du cylindre hydraulique.

13. Essieu hydraulique selon au moins une des revendications précédentes, **caractérisé en ce qu'**il est prévu un élément de précontrainte, qui est actif par rapport à une direction de sortie du cylindre hydraulique (1), en particulier un ressort mécanique (15), en particulier un ressort hydromécanique (14), en particulier une masse disposée de façon mobile verticalement et couplée au cylindre hydraulique.

14. Essieu hydraulique selon au moins une des revendications précédentes, **caractérisé en ce que** le réservoir de fluide (7) est un réservoir cylindrique, dans lequel en particulier son piston (7c) est couplé mécaniquement au piston (4c) du cylindre hydraulique (4), dans lequel en particulier le couplage mécanique est rigide en traction dans la direction de sortie.

15. Essieu hydraulique selon au moins une des revendications précédentes, **caractérisé en ce que** dans un mouvement de sortie du cylindre hydraulique (4), une quantité de fluide refoulé du réservoir de fluide (7), qui est déterminée par le couplage mécanique de l'élément de réglage de volume (7c) au piston (4c) du cylindre hydraulique (4), correspond essentiellement à une quantité de fluide reçu par le cylindre hydraulique (4).

16. Essieu hydraulique selon la revendication 15, **caractérisé en ce que** la quantité de fluide refoulé du réservoir de fluide (7) avec la quantité de fluide refoulé de la chambre annulaire (4b) vaut au moins 70 %, 80 %, 90 %, 95 % ou 99 % de la quantité de fluide reçu par la chambre cylindrique (4a) du cylindre hydraulique (4), et **en ce qu'**il est prévu un réservoir (9) pour fournir la différence de quantité.

17. Essieu hydraulique selon la revendication 12, **caractérisé en ce que** la vanne d'arrêt (10, 26) commande également une communication entre la machine hydraulique (1) et la chambre cylindrique (4a) en sens contraire de la communication entre le réservoir de fluide (7) et la chambre cylindrique (4a).

18. Essieu hydraulique selon au moins une des revendications précédentes, **caractérisé en ce que** la machine hydraulique (1) est constituée par une machine hydraulique à volume de transport réglable, dans lequel en particulier la direction de transport peut être inversée au moyen du réglage du volume de transport avec un sens de rotation inchangé.
